Europäisches Patentamt

European Patent Office

Office européen des brevets

(19)

(11) Veröffentlichungsnummer: **0 284 722**
**B1**

(12) **EUROPÄISCHE PATENTSCHRIFT**

(45) Veröffentlichungstag der Patentschrift:
18.07.90

(51) Int. Cl.⁵: **F16K 31/42**

(21) Anmeldenummer: 88101275.1

(22) Anmeldetag: 29.01.88

(54) **Ventileinrichtung.**

(30) Priorität: 28.03.87 DE 3710351

(43) Veröffentlichungstag der Anmeldung:
05.10.88 Patentblatt 88/40

(45) Bekanntmachung des Hinweises auf die Patenterteilung:
18.07.90 Patentblatt 90/29

(84) Benannte Vertragsstaaten:
CH DE FR IT LI

(56) Entgegenhaltungen:
DE-A- 2 517 571
DE-A- 3 306 317
GB-A- 2 117 875
US-A- 2 129 938
US-A- 2 398 775

(73) Patentinhaber: WABCO Westinghouse
Steuerungstechnik GmbH & Co.,
Bartweg 13 Postfach 91 12 70, D-3000 Hannover 91(DE)

(72) Erfinder: Göttling, Helmut, Dipl.-Ing., Fuhrenkamp 3,
D-3004 Isernhagen 4(DE)
Erfinder: Müller, Peter, Ossletzkyring 37 F,
D-3000 Hannover 91(DE)
Erfinder: Möller, Rudolf, Ing.(grad.), Knülweg 15 c,
D-3007 Gehrden 1(DE)
Erfinder: Scharnowski, Gerhard Ing.(grad.), Im
Vogelsang 12, D-3007 Gehrden 1(DE)

(74) Vertreter: Schrödter, Manfred, WABCO Westinghouse
Fahrzeugbremsen GmbH Am Lindener
Hafen 21 Postfach 91 12 80, D-3000 Hannover 91(DE)

## Beschreibung

Die Erfindung betrifft eine Ventileinrichtung gemäß dem Oberbegriff des Patentanspruchs 1.

Eine derartige Ventileinrichtung ist aus der US-A 2 398 775 bekannt.

Diese bekannte Ventileinrichtung weist ein als Steuerkolben ausgebildetes Betätigungsglied zur Betätigung eines Hauptventils auf, über welches eine Druckmittelquelle mit einer Druckmittelsenke verbindbar ist. Das Hauptventil und das Betätigungsglied sind miteinander verbunden. Das Betätigungsglied ist vom Druck in einer Steuerkammer in Öffnungsrichtung des Hauptventils beaufschlagbar. Über ein Vorsteuerventil ist die Steuerkammer mit einer Druckmittelquelle verbindbar und über einen Entlüftungskanal ist die Steuerkammer ständig mit der Druckmittelsenke bzw. mit einer mit der Druckmittelsenke in Verbindung stehenden Kammer verbunden.

Durch diese Ausbildung der Ventileinrichtung ist es möglich, das Hauptventil mittels eines als einfaches 2/2-Wegeventil ausgebildeten Vorsteuerventils zu steuern.

Bei Beaufschlagung der Steuerkammer über das geöffnete 2/2-Wege-Vorsteuerventil mit Druckmittel wird das Betätigungsglied gegen eine Rückstellkraft in Öffnungsrichtung des Hauptventils bewegt, wodurch der Hauptdruckmittelweg (Eingang – Ausgang des Hauptventils) freigegeben wird. Wird das 2/2-Wege-Vorsteuerventil geschlossen, so wird die Druckmittelzufuhr zur Steuerkammer unterbrochen. Da die Steuerkammer aber durch den Entlüftungskanal ständig mit der Druckmittelsenke verbunden ist, erfolgt eine Entlüftung der Steuerkammer. Das Hauptventil wird mittels der Rückstellkraft geschlossen.

Eine derartige Ventileinrichtung wird z.B. benötigt, um mit geringen Schaltkräften große Druckmittelquerschnitte zu schalten. Bei solchen vorgesteuerten Ventilen wird praktisch ein Vorsteuerventil mit einem Hauptventil gekoppelt. Dabei wird das Hauptventil meist durch die Energie des Arbeitsdruckes geschaltet. Auf diese Weise können verhältnismäßig große Druckmittelmengen problemlos mit kleinen Betätigungskräften geschaltet werden.

Solche Ventileinrichtungen werden häufig dort benötigt, wo automatische Betriebsabläufe durch elektronische Schaltungen steuerbar sind. In solchen Steuerungsanlagen werden vorzugsweise Magnetventile als Vorsteuerventile eingesetzt, die dann von einer Elektronikschaltung angesteuert werden. Dadurch sind mit verhältnismäßig kleiner elektrischer Schaltleistung schnell relativ große Druckmittelquerschnitte schaltbar.

Die bekannte Ventileinrichtung arbeitet mit konstantem Durchlaßquerschnitt des Hauptventils.

Der Erfindung liegt die Aufgabe zugrunde, eine Ventileinrichtung der eingangs erwähnten Art zu schaffen, die es ermöglicht, mit einfachen Mitteln den Durchlaßquerschnitt des Hauptventils zu verändern.

Diese Aufgabe wird mit den in den Patentansprüchen 1 und 2 angegebenen Ausführungsarten der Erfindung gelöst. Weiterbildungen und vorteilhafte Ausgestaltungen der Erfindung sind in den Unteransprüchen aufgezeigt.

Die Erfindung bietet insbesondere den Vorteil, durch die Ausbildung des entweder im Betätigungsglied oder in einem Gehäuseteil angeordneten Entlüftungskanal als veränderbare Drossel, deren Querschnitt in Abhängigkeit von der Stellung des Betätigungsgliedes veränderbar ist, den Durchlaßquerschnitt des Hauptventils verändern zu können.

Bei einer vorteilhaften Ausführungsform der Erfindung ist die Drosselbohrung im Kolbenboden erweitert. In diesem Teil der Bohrung ragt eine einstellbare Schraube mit konisch ausgebildeter Spitze, die bei einer Kolbenbewegung eine selbsttätige Veränderung der Drosselwirkung hervorruft. Dies hat den Vorteil, daß durch eine Einstellung der Schraube gleichzeitig eine Veränderung des Durchflußquerschnittes am Hauptventil erreichbar ist. Dadurch können mit einfachen Mitteln bei gleichbleibender Vorsteuerung verschiedene Druckmitteldurchflußmengen gesteuert werden.

Durch die besondere Ausgestaltung der Steuermittel schaltet das Hauptventil ausschließlich durch eine Flächenkraftdifferenz. Dies wird dadurch erreicht, daß die wirksame Steuerfläche des Hohlkolbens größer ist als die Fläche des angeflanschten Verschlußstückes, die vom Druck einer Druckmittelquelle beaufschlagt ist. Dabei hat sich ein Flächenverhältnis von 2:1 als besonders vorteilhaft erwiesen, weil dann auf eine sonst übliche Rückstellfeder verzichtet werden kann. Hierdurch ergibt sich gleichzeitig eine kompakte Bauart und eine einfache Montage der Ventileinrichtung.

Vorzugsweise bestehen die Steuermittel aus einem Hohlkolben, der in einer Zylinderbohrung geführt ist und in dessen Hohlraum eine Gehäuseabdeckung hineinragt, die diesen Steuerraum weitgehend ausfüllt.

Dieser Füllraum wird in erster Linie durch den Kolbenhub bestimmt, so daß durch die minimale Totzeit eine sehr hohe Ansprechgeschwindigkeit erreichbar ist.

Da eine Abdichtung der Steuerkammer entbehrlich ist, treten am Steuerkolben auch kaum Reibungsverluste auf.

Die Erfindung wird anhand der Zeichnung nachstehend näher erläutert.

Es zeigen:

Fig. 1 eine Ventileinrichtung mit einem Magnetventil als Vorsteuerventil, das nach dem Prinzip gemäß dem Stand der Technik arbeitet und

Fig. 2 eine Ventileinrichtung nach Fig. 1, die jedoch Mittel zur Veränderung des Durchlaßquerschnittes des Hauptventils aufweist.

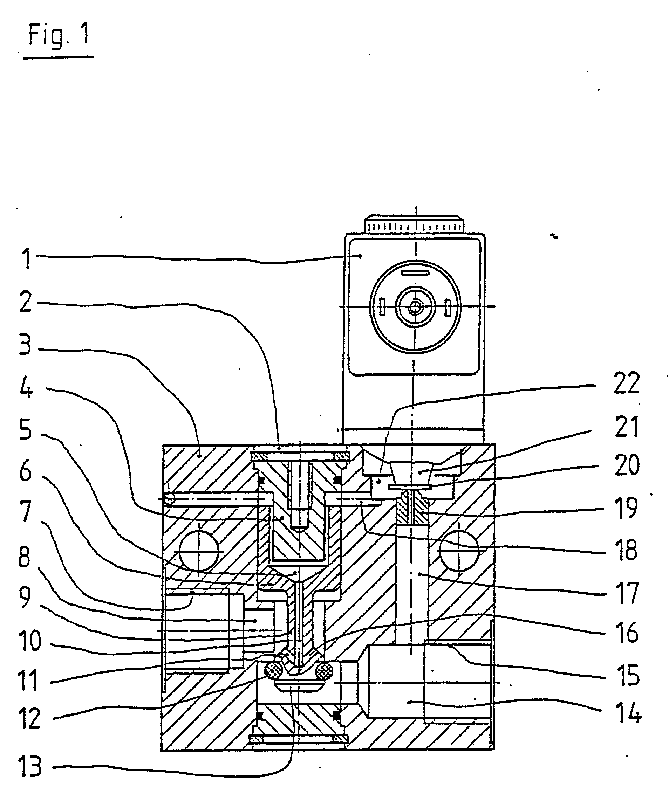

In Fig. 1 der Zeichnung ist eine Ventileinrichtung mit einem Magnetventil als Vorsteuerventil dargestellt. Durch das Magnetventil wird ein Steuerkolben mit dem am Eingang anstehenden Druck einer Druckmittelquelle beaufschlagt, der dann das Hauptventil betätigt.

Die Ventileinrichtung besteht aus einem rechteckigen Gehäuseteil (3) auf dem ein Elektromagnet (1) mit einem Anker (21) zur Betätigung des Magnetventils befestigt ist. Das Gehäuse (3) besitzt an der einen Seite einen Eingangsdruckmittelanschluß (15), der in einen Eingangsdruckraum (14) mündet, an dem in der Regel der Druck einer Druckmittelquelle ansteht. Von dem Eingangsdruckraum (14) zweigt rechtwinklig eine Bohrung (17) ab, die senkrecht auf einer Ankerplatte (20) des Elektromagneten (1) endet und an deren Endpunkt ein Dichtkörper (19) eingelassen ist. Der Dichtkörper (19) besitzt wiederum eine Druckmittelöffnung, die von der Ankerplatte (20) des Elektromagneten (1) im Ruhezustand geschlossen gehalten wird.

Parallel zur Abzweigbohrung (17) befindet sich im Gehäuse (3) eine Steuerkammerbohrung (2), die bis in den Eingangsdruckraum (14) hineinragt. Diese Bohrung (2) dient zur Aufnahme des Betätigungsgliedes (6). Auf der dem Eingangsanschluß (15) entgegengesetzten Seite befindet sich ein Ausgangsanschluß (7), dessen Bohrung parallel zur Eingangsbohrung verläuft und die in der Steuerkammerbohrung (2) endet.

Das Betätigungsglied ist dabei als Hohlkolben (6) ausgebildet, an dem ein Verschlußglied angeflanscht und das als Verschlußstück (13) ausgebildet ist. Der Hohlkolben (6) stellt einen Steuerkolben dar, der in der Steuerkammerbohrung (2) beweglich angeordnet ist. Dabei besitzt diese Bohrung (2) im Bewegungsbereich des Steuerkolbens (6) einen größeren Durchmesser als im Bereich des Flansches (9) und des Verschlußstücks (13).

Im Mittelpunkt des Hohlkolbens (6) sind Entlüftungsmittel angebracht, die als Entlüftungsbohrungen (10, 11, 16) ausgebildet sind. Eine Entlüftungsbohrung (10) verläuft senkrecht vom Kolbenboden aus und reicht bis in das Verschlußstück (13). Diese Bohrung (10) ist als Drosselbohrung ausgebildet. Das Verschlußstück (13) besteht aus einer zylinderartigen Erweiterung des Flansches (9), das flanschseitig kegelförmig abgeschrägt ist. Am Verschlußteil ist gleichfalls eine Holzkehle angebracht, die zur Aufnahme des Dichtkörpers (12) dient. Der Dichtkörper besteht aus einer O-Ringdichtung.

Innerhalb des Verschlußstücks (13) sind zwei weitere sich gegenüberliegende Entlüftungsbohrungen (11, 16) angebracht, die mit der senkrechten Entlüftungsbohrung (10) einen spitzen Winkel bilden und im Verschlußstück (13) miteinander verbunden sind. Die beiden Entlüftungsbohrungen (11, 16) treten innerhalb des Ausgangsdruckraums (8) an der kegelförmigen Schräge aus dem Verschlußstück (13) heraus. Der Ausgangsdruckraum (8) stellt die Druckmittelsenke dar, die in der Regel mit dem Verbraucher oder der Atmosphäre verbunden ist, und er mündet im Bereich des Flansches (9) in die Steuerkammerbohrung (2) hinein. Der Eingangsdruckraum (14) endet gleichfalls in der Steuerkammerbohrung (2), allerdings innerhalb des Bereiches, in dem sich das Verschlußstück (13) befindet.

Zwischen dem Eingangsdruckraum (14) und dem Ausgangsdruckraum (8) ist ein Ventilsitz angeordnet, auf dem die Dichtung (12) des Verschlußstücks (13) bei geschlossenem Vorsteuerventil zur Anlage kommt. Dieses Ventil bildet das Hauptventil und trennt gleichzeitig den Eingangsdruckraum (14) von dem Ausgangsdruckraum (8). Bei geöffnetem Hauptventil befindet sich im Bereich des Verschlußstücks (13) die Stelle mit dem geringsten Durchlaßquerschnitt, an der auch der geringste Druck innerhalb des Hauptdruckmittelflusses vorhanden ist.

Im Bereich der geöffneten Seite des Hohlkolbens (6) stellt die Steuermittelbohrung (2) eine Steuerkammer (5) dar, die durch ein Gehäuseabschlußteil (4) verschlossen ist. Dieser Gehäuseabschluß (4) ist zylinderförmig ausgebildet und ragt mit einem Vorsprung in den Hohlraum des Steuerkolbens (6) hinein, um den Füllraum möglichst gering zu halten, so daß eine minimale Ansprechzeit gegeben ist.

Zwischen der Vorsteuerkammer (22) und der Steuerkammer (5) ist ein Druckmittelkanal (18) vorgesehen, der beide Kammern miteinander verbindet. Durch diesen Kanal (18) gelangt bei geöffnetem Magnetventil Steuerdruck in die Steuerkammer (5) und sorgt für ein Ansprechen des Hauptventils.

Die soweit beschriebene Ventileinrichtung arbeitet wie folgt:

Der am Eingangsanschluß (15) anstehende Vorratsdruck der Druckmittelquelle ist stets höher als die am Ausgangsanschluß (7) anstehende Druckmittelsenke. Wird durch eine nicht dargestellte Steuerschaltung an den Elektromagneten (1) ein elektrischer Spannungsimpuls angelegt, so hebt die Magnetankerplatte (20) vom Dichtkörper (19) ab und läßt Vorratsdruck in die Steuerkammer (5) strömen. Der sich darin sehr rasch aufbauende Druck bewegt den Steuerkolben (6) in Öffnungsrichtung des Hauptventils. Dabei erfolgt eine Kolbenbewegung, weil die wirksame Fläche des Steuerkolbens (6) doppelt so groß ist als die Fläche des Verschlußgliedes (13), die vom Vorratsdruck beaufschlagt wird. Für den Druckaufbau in der Steuerkammer (5) sind die Entlüftungsbohrungen (10, 11, 16) ohne Wirkung, weil sie Drosselbohrungen darstellen und somit erst für eine allmähliche Druckentlastung sorgen.

Durch die erfolgte Kolbenbewegung öffnet das Hauptventil, und es strömt Vorratsluft an den Entlüftungsöffnungen vorbei in den Ausgangsanschluß (7) und belüftet daran anschließbare Verbraucher oder geht in die Atmosphäre. Solange das Vorsteuerventil geöffnet ist, bleibt auch das Hauptventil offen.

Schließt hingegen das Vorsteuerventil wieder, so wird der Vorratsdruck zur Steuerkammer (5) unterbrochen. Da allerdings am Verschlußstück (13) weiterhin Druckmittel vorbeiströmt, entsteht im Bereich der Austrittsöffnungen (11, 16) ein niedrigerer Druck als der Vorratsdruck. Dies wird durch die Engstelle im Bereich des Hauptventils verursacht, die an dieser Stelle den geringsten Durchlaßquerschnitt aufweist und deshalb durch die erhöhte Durchströmgeschwindigkeit eine Druckreduzierung zur Folge hat. Dadurch entsteht gleichzeitig eine Druckdifferenz gegenüber dem Druck in der Steuerkammer (5), welches zu einem Druckausgleich über die Entlüftungsbohrungen (10, 11, 16) führt und die Steuerkammer (5) teilweise entlüftet. Hierdurch tritt eine Verringerung der Krafteinwirkung auf den Steuerkolben (6) ein, so daß die Kraft auf das Verschlußstück (13) durch den Vorratsdruck überwiegt und das Hauptventil wieder verschließt.

Eine derartige Ventileinrichtung mit einem Vorsteuermagnetventil arbeitet mit Schaltfrequenzen bis etwa 100 Hz, weil die zu schaltenden Massen sehr klein gehalten werden können. Da auch die Entlüftung der Steuerkammer (5) nicht über einen separaten Weg zur Atmosphäre verfügt, kann auf eine Abdichtung des Steuerkolbens verzichtet werden, so daß die dadurch erzielbare reibungsfreie Steuerung zu einer schnelleren Schaltgeschwindigkeit führt. Als besonders vorteilhaft für den Einsatz als Impulsventil hat sich deshalb ein Flächenverhältnis der wirksamen Steuerfläche zur Fläche des Verschlußstücks (13) von 2:1 herausgestellt. Für andere Anwendungsbereiche sind auch andere Flächenverhältnisse denkbar. Dabei muß allerdings die Steuerkolbenfläche bei drucklosen Arbeitsanschluß immer grö ßer sein als die Verschlußstücksfläche des Hauptventils.

Das Ausführungsbeispiel ist aber auch so ausbildbar, daß das Vorsteuerventil den Druck einer externen Druckmittelquelle in die Steuerkammer einleitet. Dadurch könnte die Durchflußmenge durch das Hauptventil in Abhängigkeit des externen Druckes gesteuert werden.

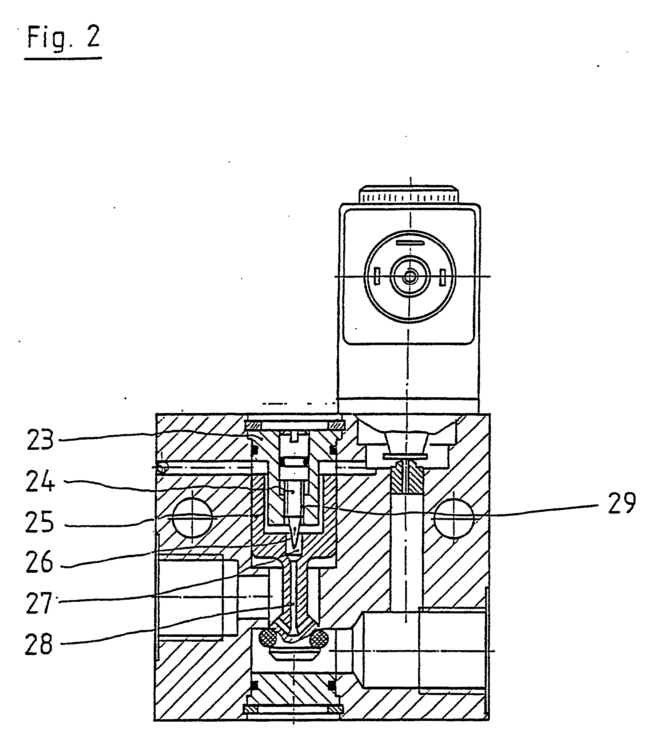

In Fig. 2 der Zeichnung ist eine Ventileinrichtung mit Vorsteuerventil dargestellt, die im wesentlichen wie die nach Fig. 1 beschriebene Einrichtung aufgebaut ist. Bei dieser ist allerdings die Drosselwirkung der Entlüftungsbohrung verstellbar, wodurch zusätzlich eine Steuerung des Druckmitteldurchlasses am Hauptventil bewirkt wird.

Da die Ventileinrichtung nach Fig. 2 nur bei der Ausbildung des Betätigungsgliedes (6) von der vorstehend beschriebenen Ausführungsform abweicht, sind hier nur die Abweichungen beschrieben. Im übrigen gilt das vorstehend zu Fig. 1 Beschriebene entsprechend.

Die Ventileinrichtung enthält ebenfalls einen Steuerkolben (25), der in einer Bohrung beweglich geführt ist. Die Entlüftungsbohrung (28) enthält allerdings im Kolbenboden eine zylinderförmige Erweiterung (27), in die eine konische Spitze (26) einer Einstellschraube (24) hineinragt. Die Einstellschraube (24) ist in einer Bohrung (29) der Gehäuseabdeckung (23) schraubbar angeordnet. Dabei ist die Schraube (24) nach außen hin abgedichtet und mit einem Schlitz versehen, der eine axiale Verstellbarkeit zuläßt.

Die vorstehend beschriebene Ventileinrichtung nach Fig. 2 arbeitet wie folgt:

Bei geschlossenem Magnetvorsteuerventil ist die Ventileinrichtung mit seinem Hauptventil zunächst geschlossen. Öffnet hingegen das Magnetvorsteuerventil, so strömt der am Eingang anstehende Vorratsdruck der Druckmittelquelle, gleichfalls wie bei der Ventileinrichtung nach Fig. 1, in die Steuerkammer (5) ein. Da der Ausgangsdruck der Druckmittelsenke stets niedriger ist als der Vorrats- und Steuerdruck, wird sich der Steuerkolben (25), in Öffnungsrichtung des Hauptventils bewegen und dabei das Hauptventil öffnen. Dadurch tritt aber gleichzeitig auch eine Vergrößerung des Durchflußquerschnitts der Entlüftungsbohrung auf, da sich kegelförmige Spitze der Einstellschraube (24) in geschlossenem Zustand weiter in der Entlüftungsbohrung befand und deshalb den Druckmitteldurchflußquerschnitt verengte.

Bei zunehmender Vergrößerung des Querschnitts der Entlüftungsbohrung kann aber auch zunehmend mehr Steuerdruckmittel in den Druckmittelausgang entweichen. Besitzt nun der Vorsteuerweg einen bestimmten Druckmitteldurchflußquerschnitt, so wird sich der Steuerkolben (25) so lange in Öffnungsrichtung bewegen, bis der Querschnitt der Entlüftungsbohrung gleich dem Querschnitt des Vorsteuerweges ist. Hierzu ist allerdings Voraussetzung, daß die Entlüftungsbohrung einen größeren Querschnitt aufweist als die engste Stelle des Vorsteuerweges. Da aber die Einstellschraube (24) axial verstellbar ist, wird der Steuerkolben je nach Schraubenstellung unterschiedliche Betätigungswege zurücklegen und dadurch auch unterschiedliche Öffnungsquerschnitte des Hauptventils aussteuern.

Der Schließvorgang erfolgt ebenfalls so, wie zuvor bei der Ventileinrichtung nach Fig. 1 beschrieben.

Die vorstehend beschriebenen Ausführungsbeispiele der Erfindung beziehen sich auf Ventileinrichtungen, deren Vorsteuerwege immer konstante Durchflußquerschnitte aufweisen. Der Vorsteuerweg kann aber auch so ausgebildet sein, daß dessen Öffnungsquerschnitt veränderbar ist. Dadurch ist gleichfalls eine Steuerung des Öffnungsquerschnitts des Hauptventils erreichbar. Voraussetzung hierfür ist allerdings, daß der Öffnungsquerschnitt des Vorsteuerweges nicht größer werden kann als der Querschnitt des Entlüftungsweges.

Es ist auch möglich, daß der Steuerkolben unmittelbar mit einem einstellbaren Druck beaufschlagt wird. Hierdurch wäre dann eine unmittelbare Drucksteuerung möglich, dessen ausgesteuerter Druck im wesentlichen von der Höhe des Vorsteuerdruckes und dessen Flächenverhältnis abhängt.

Darüber hinaus ist es auch denkbar, die Entlüftungsmittel als Entlüftungskanal innerhalb des Ventilgehäuses auszubilden. Dabei müßte der Entlüftungskanal eine ständige Verbindung zwischen der Steuerkammer und der Engstelle herstellen und als Drossel ausgebildet sein. Dieser Kanal könnte dann auch durch ein am Steuerkolben befindliches Drosselmittel in seinem Querschnitt veränderbar sein. Wenn diese Querschnittsänderung in Abhängigkeit der Steuerkolbenstellung erfolgen würde, so könnte dadurch auch eine Mengensteuerung wie beim Ausführungsbeispiel nach Fig. 2 erreicht werden.

## Patentansprüche

1. Ventileinrichtung mit einem Hauptventil zum Verbinden einer Druckmittelquelle mit einer Druckmittelsenke mit folgenden Merkmalen:

a) es ist ein Betätigungsglied (6) zur Betätigung des Hauptventils (12, 13) vorgesehen;

b) das Betätigungsglied (6) ist mit dem Druck in einer Steuerkammer (5) beaufschlagbar;

c) Die Steuerkammer (5) ist über ein Vorsteuerventil (19, 20, 21) mit einer Druckmittelquelle und über Entlüftungsmittel mit der Druckmittelsenke (8) verbindbar;

d) das Betätigungsglied (6) ist vom Druck in der Steuerkammer (5) in Öffnungsrichtung des Hauptventils (12, 13) beaufschlagbar;

e) die Entlüftungsmittel weisen einen Entlüftungskanal (10, 11, 16) auf, über den die Steuerkammer (5) ständig mit der Druckmittelsenke (8) bzw. mit einer mit der Druckmittelsenke (8) in Verbindung stehenden Kammer verbunden ist;

gekennzeichnet durch die folgenden Merkmale:

f) der Entlüftungskanal (10, 11, 16) ist als veränderbare Drossel ausgebildet, deren Querschnitt von der Stellung des Betätigungsgliedes (6) abhängig ist;

g) der Entlüftungskanal (10, 11, 16) verläuft im Betätigungsglied (6) und ist durch ein an einem Gehäuseteil (3) angeordnetes Drosselmittel (24) in seinem Querschnitt veränderbar.

2. Ventileinrichtung mit einem Hauptventil zum Verbinden einer Druckmittelquelle mit einer Druckmittelsenke mit folgenden Merkmalen:

a) es ist ein Betätigungsfeld (6) zur Betätigung des Hauptventils (12, 13) vorgesehen;

b) das Betätigungsglied (6) ist mit dem Druck in einer Steuerkammer (5) beaufschlagbar;

c) die Steuerkammer (5) ist über ein Vorsteuerventil (19, 20, 21) mit einer Druckmittelquelle und über Entlüftungsmittel mit der Druckmittelsenke (8) verbindbar;

d) das Betätigungsglied (6) ist vom Druck in der Steuerkammer (5) in Öffnungsrichtung des Hauptventils (12, 13) beaufschlagbar;

e) die Entlüftungsmittel weisen einen Entlüftungskanal auf, über den die Steuerkammer (5) ständig mit der Druckmittelsenke (8) bzw. einer mit der Druckmittelsenke (8) in Verbindung stehenden Kammer verbunden ist;

gekennzeichnet durch die folgenden Merkmale:

f) der Entlüftungskanal ist als veränderbare Drossel ausgebildet, deren Querschnitt von der Stellung des Betätigungsgliedes (6) abhängig ist;

g) der Entlüftungskanal verläuft in einem Gehäuseteil (3) und ist durch ein am Betätigungsglied (6) angebrachtes Drosselmittel in seinem Querschnitt veränderbar.

3. Ventileinrichtung nach Anspruch 1, dadurch gekennzeichnet, daß das Drosselmittel als verstellbare Schraube (24) ausgebildet ist, die in axialer Richtung verstellbar ist und mit ihrer kegelförmigen Spitze in eine Entlüftungsbohrung (27) des Entlüftungskanals (10, 11, 16, 28) hineinragt.

4. Ventileinrichtung nach Anspruch 1, dadurch gekennzeichnet, daß das Betätigungsglied (6) als Hohlkolben (6, 25) ausgebildet ist, der mindestens einen Entlüftungskanal in Form einer Entlüftungsbohrung (10, 11, 16, 28) enthält und an dem ein angeflanschtes Verschlußglied (13) für das Hauptventil (12, 13) vorgesehen ist.

5. Ventileinrichtung nach Anspruch 4, gekennzeichnet durch die folgenden Merkmale:

a) der Hohlkolben (6, 25) ist mit mindestens einer Entlüftungsbohrung (10, 11, 16, 28) versehen, die vom Boden des Hohlkolbens (6, 25) ausgeht und am Verschlußglied (13) austritt;

b) die Entlüftungsbohrung (10, 11, 16, 28) besteht aus einer senkrechten Sackbohrung (10, 28), die im Mittelpunkt des Steuerkolbens (6, 28) beginnt und bis in das Verschlußglied (13) reicht und dessen Endpunkt mit zwei zusätzlichen Bohrungen (11, 16) verbunden ist, die auf einer kegelförmigen Fläche des Verschlußgliedes einander gegenüber beginnen und mit der Sackbohrung (10) einen spitzen Winkel bilden.

6. Ventileinrichtung nach wenigstens einem der vorhergehenden Ansprüche, dadurch gekennzeichnet, daß ein Elektromagnet (1) und ein von diesem betätigbarer Anker vorgesehen ist, der zum Öffnen und Schließen des Vorsteuerventils (19, 20, 21) dient.

7. Ventileinrichtung nach wenigstens einem der vorhergehenden Ansprüche, dadurch gekennzeichnet, daß der Durchflußquerschnitt des Vorsteuerweges einstellbar ist.

8. Ventileinrichtung nach wenigstens einem der vorhergehenden Ansprüche, dadurch gekennzeichnet, daß das Betätigungsglied (6) so ausgebildet ist, daß es mit einem vorbestimmbaren oder veränderbaren Steuerdruck beaufschlagbar ist.

9. Ventileinrichtung nach wenigstens einem der vorhergehenden Ansprüche, dadurch gekennzeichnet, daß die mit Steuerdruck beaufschlagbare Wirkfläche des Betätigungsgliedes (6) größer ist als die mit Eingangsdruck beaufschlagbare Wirkfläche des Verschlußgliedes (13).

**Claims**

1. Valve device having a main valve for connecting a pressure-medium source to a pressure-medium sink, having the following features:

a) an actuating member (6) for actuating the main valve (12, 13) is provided;

b) the actuating member (6) can be subjected to the pressure in a control chamber (5);

c) the control chamber (5) can be connected by way of a precontrol valve (19, 20, 21) to a pressure-medium source and by way of venting means to the pressure-medium sink (8);

d) the actuating member (6) can be subjected to the pressure in the control chamber (5) in the opening direction of the main valve (12, 13);

e) the venting means have a venting conduit (10, 11, 16) by way of which the control chamber (5) is constantly connected to the pressure-medium sink (8) or to a chamber that communicates with the pressure-medium sink (8);

characterised by the following features:

f) the venting conduit (10, 11, 16) is in the form of an adjustable throttle the cross-section of which is dependent on the position of the actuating member (6);

g) the venting conduit (10, 11, 16) extends through the actuating member (6) and its cross-section is adjustable by throttle means (24) arranged on a housing portion (3).

2. Valve device having a main valve for connecting a pressure-medium source to a pressure-medium sink, having the following features:

a) an actuating member (6) for actuating the main valve (12, 13) is provided;

b) the actuating member (6) can be subjected to the pressure in a control chamber (5);

c) the control chamber (5) can be connected by way of a precontrol valve (19, 20, 21) to a pressure-medium source and by way of venting means to the pressure-medium sink (8);

d) the actuating member (6) can be subjected to the pressure in the control chamber (5) in the opening direction of the main valve (12, 13);

e) the venting means have a venting conduit by way of which the control chamber (5) is constantly connected to the pressure-medium sink (8) or to a chamber that communicates with the pressure-medium sink (8);

characterised by the following features:

f) the venting conduit is in the form of an adustable throttle the cross-section of which is dependent on the position of the actuating member (6);

g) the venting conduit extends through a housing portion (3) and its cross-section is adjustable by throttle means attached to the actuating member (6).

3. Valve device according to claim 1, characterised in that the throttle means is in the form of an adjustable screw (24) which is adjustable in an axial direction and the conical tip of which projects into a venting bore (27) forming part of the venting conduit (10, 11, 16, 28).

4. Valve device according to claim 1, characterised in that the actuating member (6) is in the form of a hollow piston (6, 25) which contains at least one venting conduit in the form of a venting bore (10, 11, 16, 28) and on which is provided a closure member (13) for the main valve (12, 13), the closure member being in the form of a flange.

5. Valve device according to claim 4, characterised by the following features:

a) the hollow piston (6, 25) is provided with at least one venting bore (10, 11, 16, 28) that starts from the base of the hollow piston (6, 25) and emerges at the closure member (13);

b) the venting bore (10, 11, 16, 28) comprises a perpendicular blind bore (10, 28) that begins at the centre point of the control piston (6, 28) and extends into the closure member (13) and the end point of which communicates with two additional bores (11, 16) which begin opposite one another on a conical surface of the closure member and form an acute angle with the blind bore (10).

6. Valve device according to at least one of the preceding claims, characterised in that an electromagnet (1) and an armature actuable by the latter is provided which serves to open and close the precontrol valve (19, 20, 21).

7. Valve device according to at least one of the preceding claims, characterised in that the throughflow cross-section of the precontrol path is adjustable.

8. Valve device according to at least one of the preceding claims, characterised in that the actuating member (6) is so constructed that it can bei subjected to a predeterminable or adjustable control pressure.

9. Valve device according to at least one of the preceding claims, characterised in that the active area of the actuating member (6) that can be subjected to control pressure is greater than the active area of the closure member (13) that can be subjected to input pressure.

**Revendications**

1. Robinet possédant une soupape principale pour relier une source de fluide de pression à un récepteur de fluide de pression, présentant les particularités suivantes:

a) il comprend un organe de manœuvre (6) pour manœuvrer la soupape principale (12, 13);

b) la pression dans une chambre de commande (5) est applicable à l'organe de manœuvre (6);

c) la chambre de commande (5) peut être reliée par une soupape pilote (19, 20, 21) à une source de fluide de pression et par des moyens d'échappement d'air au récepteur de fluide de pression (8);

d) l'organe de manœuvre (6) peut être sollicité par la pression dans la chambre de commande (5) dans le sens de l'ouverture de la soupape principale (12, 13); et

e) les moyens d'échappement d'air comprennent un canal d'échappement d'air (10, 11, 16) par lequel la chambre de commande (5) est reliée en permanance au récepteur de fluide de pression (8) ou à une chambre communiquant avec le récepteur de fluide de pression (8);

caractérisé en ce que:

f) le canal d'échappement d'air (10, 11, 16) est réalisé comme un limiteur de débit variable, du type à étranglement, dont la section dépend de la position de l'organe de manœuvre, dont la section dépend de la position de l'organe de manœuvre (6); et

g) le canal d'échappement d'air (10, 11, 16) s'étend dans l'organe de manœuvre (6) et sa section est variable par un moyen d'étranglement (24) disposé sur une partie (3) du corps du robinet,

2. Robinet possédant une soupape principale pour relier une source de fluide de pression à un récepteur de fluide de pression, présentant les particularités suivantes:

a) il comprend un organe de manœuvre (6) pour manœuvrer la soupape principale (12, 13);

b) la pression dans une chambre de commande (5) est applicable à l'organe de manœuvre (6);

c) la chambre de commande (5) peut être reliée par une soupape pilote (19, 20, 21) à une source de fluide de pression et par des moyens d'échappement d'air au récepteur de fluide de pression (8);

d) l'organe de manœuvre (6) peut être sollicité par la pression dans la chambre de commande (5) dans le sens de l'ouverture de la soupape principale (12, 13); et

e) les moyens d'échappement d'air comprennent un canal d'échappement d'air par lequel la chambre de commande (5) est reliée en permanance au récepteur de fluide de pression (8) ou à une chambre communiquant avec le récepteur de fluide de pression (8);

caractérisé en ce que:

f) le canal d'échappement d'air est réalisé comme un limiteur de débit variable, du type à étranglement, dont la section dépend de la position de l'organe de manœuvre (6); et

g) le canal d'échappement d'air s'étend dans une partie (3) du corps du robinet et sa section est variable par un moyen d'étranglement disposé sur l'organe de manoeuvre (6).

3. Robinet selon la revendication 1, caractérisé en ce que le moyen d'étranglement est réalisé comme une vis de réglage (24) qui est déplaçable en direction axiale et qui pénètre par une pointe conique dans un perçage d'échappement d'air (27) du canal d'échappement d'air (10, 11, 16, 28).

4. Robinet selon la revendication 1, caractérisé en ce que l'organe de manœuvre (6) est réalisé comme un piston creux (6, 25) qui contient au moins un canal d'échappement d'air sous la forme d'un perçage d'échappement d'air (10, 11, 16, 28) et sur lequel est prévu un obturateur (13) pour la soupape principale (12, 13), obturateur qui est relié par un col à l'organe de manœuvre.

5. Robinet selon la revendication 4, caractérisé en ce que:

a) le piston creux (6, 25) est pourvu d'au moins un perçage d'échappement d'air (10, 11, 16, 28) qui part du fond du piston creux (6, 25) et débouche sur l'obturateur (13); et

b) le perçage d'échappement d'air (10, 11, 16, 28) est constitué d'un perçage borgne vertical (10, 28) qui commence au centre du piston de commande (6, 28) et s'étend jusque dans l'obturateur (13) et dont le point terminal communique avec deux perçages supplémentaires (11, 16) qui partent l'un en face de l'autre d'une surface conique de l'obturateur et renferment un angle aigu avec le perçage borgne (10).

6. Robinet selon au moins une des revendications précédentes, caractérisé en ce qu'il comprend un électroaimant (1) et une armature commandée par lui et servant à l'ouverture et à la fermeture de la soupape pilote (19, 20, 21).

7. Robinet selon au moins une des revendications précédentes, caractérisé en ce que la section de passage du trajet de pilotage est réglable.

8. Robinet selon au moins une des revendications précédentes, caractérisé en ce que l'organe de manœuvre (6) est réalisé de manière qu'il puisse être sollicité par une pression de commande prédéterminée ou une pression de commande variable.

9. Robinet selon au moins une des revendications précédentes, caractérisé en ce que la face utile de l'organe de manœuvre (6), à laquelle est appliquée la pression de commande, est plus grande que la face utile de l'obturateur (13), à laquelle est appliquée la pression d'entrée.

EP 0 284 722 B1

## Fig. 1

## Fig. 2